# EUROPEAN PATENT APPLICATION

(11) **EP 2 424 265 A2**
(43) Date of publication of application: **29.02.2012**
(21) Application number: 11178725.5
(22) Date of filing: 24.08.2011
(51) Int. Cl.: H04N 21/45, H04N 21/4722, H04N 21/466

(54) **Augmented intelligent context**

(30) Priority: 27.08.2010 US 377761 P; 27.08.2010 US 377767 P; 05.04.2011 US 80100; 27.04.2011 US 95672
(71) Applicant: SAMSUNG ELECTRONICS CO., LTD., Suwon-si Gyeonggi-do 442-742 (KR)
(72) Inventor: Zhu, Yingnan, Irvine, CA California 92612 (US); Zheng, Xing, Irvine, CA California 92604 (US); Gicklhorn, Daniel P., Irvine, CA California 92620 (US); Lovelace, Michael R., Irvine, CA California 92618 (US); Khoshgozaran, Jaffar, Long Beach CA 90802-4753 (US); Tran, Dang, Laguna Niguel, CA California 92677 (US)
(74) Representative: Robinson, Ian Michael

(57) **Abstract**

In a first embodiment of the present invention, a method for enhancing content playing on a device is provided, the method comprising: extracting context information; retrieving a policy, wherein the policy comprises one or more constraints; applying one or more of the constraints in the policy to the extracted context information, producing augmented context information; sending the augmented context information as a query to an entity external to the device; receiving results from the entity external to the device in response to the query; and displaying the results from the entity external to the device on the device.

## Description

### CROSS REFERENCE TO RELATED APPLICATIONS

This application claims the benefit of U.S. Patent Application No. 13/095,672, filed on April 27, 2011, U.S. Provisional Patent Application No. 61/377,767, filed August 27, 2010, U.S. Patent Application No. 13/080,100, filed April 5, 2011, and U.S. Provisional Patent Application No. 61/377,761, filed August 27, 2010.

### BACKGROUND OF THE INVENTION

### 1. Field of the Invention

The present invention relates to consumer electronics. More specifically the present invention relates to the augmentation of context information from playing content.

### 2. Description of the Related Art

The current media playing experience is, for the most part, a non-interactive and passive experience. For example, when viewing a television program on a television, the user simply watches the television. When a user listens to a music file on a portable media player, he or she simply listens to the music. While there are mechanisms available that allow users to use the same devices to interact with other data sources, such as a mechanism provided in newer televisions allowing users to surf the Internet while watching a program, the interaction is not geared specifically for the media being played. To the extent that a user wishes to "interact" with elements related to the media being played (such as, for example, purchasing a DVD copy of a television program being viewed), the user must do so manually.

Technologies exist that allow devices that have both media player and Internet-searching abilities to automatically switch between the two based upon the function currently being performed. For example, an options panel having a set of buttons can be used both in a television-playing mode and an Internet-surfing mode, providing a unified viewing experience. However, such technologies are limited to the system simply being aware of the current function being performed by the device, and the system does not take into account other factors, such as the media being played itself.

Furthermore, media playing is currently a single-device experience. While there may be any number of users watching or hearing media from a single device (such as a family sitting down and watching television together), the experience is limited to that single-device. It is becoming more and more prevalent, however, for there to be multiple accessible (and potentially Internet-enabled) devices usable within the same general area. For example, many individuals now carry cellular phones or other mobile communications devices with them at all times, many of which are Internet-enabled. Indeed, some mobile phones are "smart" enough to be considered mini-computers rather than what traditionally would be considered a phone. Additionally, tablet computers are becoming more prevalent, as are digital picture frames, which are also becoming Internet (or at least home network) enabled.

What is needed is a solution that improves upon these mechanisms.

### SUMMARY OF THE INVENTION

According to the present invention there is provided an apparatus and method as set forth in the appended claims. Other features of the invention will be apparent from the dependent claims, and the description which follows. In a first embodiment, a method for enhancing content playing on a device is provided, the method comprising: extracting context information; retrieving a policy, wherein the policy comprises one or more constraints; applying one or more of the constraints in the policy to the extracted context information, producing augmented context information; sending the augmented context information as a query to an entity external to the device; receiving results from the entity external to the device in response to the query; and displaying the results from the entity external to the device on the device.

In a second embodiment, a method for enhancing content playing on a device is provided, the method comprising: extracting context information; retrieving a policy, wherein the policy comprises a plurality of constraints and a threshold for a characteristic of query results; for each of the plurality of constraints, until a characteristic of query results meets the threshold: modifying the context information by applying the constraint to the context information; sending the context information as a query to an entity external to the device; receiving results from the entity external to the device in response to the query; and determining if a characteristic of the results meets the threshold; displaying on the device results from the last query sent to the entity external to the device.

In a third embodiment, an device for enhancing media playing on a device is provided, the device comprising: an interface; memory; a display; a processor configured to: extract context information; retrieve a policy from the memory, wherein the policy comprises one or more constraints; apply one or more of the constraints in the policy to the extracted context information, producing augmented context information; send the augmented context information via the interface as a query to an entity external to the device; receive results via the interface from the entity external to the device in response to the query; and display the results from the entity external to the device on the display.

In a fourth embodiment, an apparatus for enhancing content playing on a device, the method comprising: means for extracting context information; means for retrieving a policy, wherein the policy comprises a plurality of constraints and a threshold for a characteristic of query results; means for, for each of the plurality of constraints, until a characteristic of query results meets the threshold: modifying the context information by applying the constraint to the context information; sending the context information as a query to an entity external to the apparatus; receiving results from the entity external to the apparatus in response to the query; and determining if a characteristic of the results meets the threshold; displaying on the device results from the last query sent to the entity external to the apparatus.

In a fifth embodiment, a non-transitory program storage device readable by a machine tangibly embodying a program of instructions executable by the machine to perform a method for enhancing content playing on a device is provided, the method comprising: extracting context information; retrieving a policy, wherein the policy comprises one or more constraints; applying one or more of the constraints in the policy to the extracted context information, producing augmented context information; sending the augmented context information as a query to an entity external to the device; receiving results from the entity external to the device in response to the query; and displaying the results from the entity external to the device on the device.

### BRIEF DESCRIPTION OF THE DRAWINGS

The present invention will be readily understood by the following detailed description in conjunction with the accompanying drawings, wherein like reference numerals designate like structural elements, and in which:

FIG. 1 is an example of process flow in accordance with an embodiment of the present invention.

FIG. 2 is an example of process flow in accordance with another embodiment of the present invention.

FIG. 3 is an example of process flow in accordance with another embodiment of the present invention.

FIG. 4 is an example of a system in accordance with an embodiment of the present invention.

FIG. 5 is an example of shrinking media to a corner of a television to allow room for an enhanced television (TV+) experience in accordance with an embodiment of the present invention.

FIG. 6 depicts example hardware components in device capable of implementing embodiments of the method and system disclosed herein.

FIG. 7 is a flow diagram illustrating a method for enhancing content playing on a device in accordance with one embodiment of the present invention.

FIG. 8 is a flow diagram illustrating a method for enhancing content playing on a device in accordance with another embodiment of the present invention.

FIG. 9 is a flow diagram illustrating a method for enhancing content playing on a device in accordance with another embodiment of the present invention.

### DETAILED DESCRIPTION OF THE INVENTION

Reference will now be made in detail to specific embodiments of the invention including the best modes contemplated by the inventors for carrying out the invention. Examples of these specific embodiments are illustrated in the accompanying drawings. While the invention is described in conjunction with these specific embodiments, it will be understood that it is not intended to limit the invention to the described embodiments. On the contrary, it is intended to cover alternatives, modifications, and equivalents as may be included within the scope of the invention as defined by the appended claims. In the following description, specific details are set forth in order to provide a thorough understanding of the present invention. The present invention may be practiced without some or all of these specific details. In addition, well known features may not have been described in detail to avoid unnecessarily obscuring the invention.

In accordance with the present invention, the components, process steps, and/or data structures may be implemented using various types of operating systems, programming languages, computing platforms, computer programs, and/or general purpose machines. In addition, those of ordinary skill in the art will recognize that devices of a less general purpose nature, such as hardwired devices, field programmable gate arrays (FPGAs), application specific integrated circuits (ASICs), or the like, may also be used without departing from the scope and spirit of the inventive concepts disclosed herein. The present invention may also be tangibly embodied as a set of computer instructions stored on a computer readable medium, such as a memory device.

An embodiment of the present invention introduces the concept of a "micro-app" (short for micro-application), which resides on one or more user devices. These micro-apps are designed to utilize context information in order to query one or more content providers for result information. The context information can involve the content being played itself, the user, the device, or the general environment. Context information extracted or inferred from the content being played may be referred to as "primary" context information, while other forms of context may be referred to as "secondary" context information. Once the result information is received from the content provider(s), it can be presented on the user devices. In this manner, the micro-apps provide the ability to automatically retrieve results relevant to the currently-playing content and display them to viewers as the content is being played.

As described above, primary context information includes information extracted or inferred from the content being played. Another source for context information is the user. Various information about the user can be retrieved either explicitly or implicitly. For example, a user profile may be stored that contains user information such as age, sex, interests, profession, etc. This type of context information may be useful in determining which information to retrieve from the content providers. For example, if a family is viewing a documentary program about Africa, it may be desirable to deliver to the children pictorial information about lions, giraffes, rhinoceroses, etc. (which can be delivered directly to the children's devices), while simultaneously delivering to the adults textual information about the history of the region being observed on the device. By including not only the media content context information but also the user context information, the system is able to deliver such personalization to devices. Furthermore, additional metrics about the user(s) may also be utilized. For example, the relative position or proximity of the user to a particular device (e.g., the television) may be used (e.g., children sitting on the left, two users logged in at the kitchen, one user lying down in front of the television, etc.). Another example is user locale (which may be different from the user's region)

The user profile is an example of explicitly-specified user context information, but this information may also be deduced from implicit sources. For example, the system may be able to deduce that a user is a child by examining the application usage history (or even just the applications loaded) on the device. If, for example, the device contains a lot of games typically played by young children, it can be deduced that the user of the device is a child. In another example, the system can infer whether the television (ad hence its users) are located in a public or private place. This can be useful for targeting the audience. For instance, the television location may be geocoded and its coordinates cross-referenced with a publicly available database of points of interest. This may not just be able to tell the system whether the television is located in a public or private environment, but also the nature of the environment (e.g., it is located in a bar as opposed to a family restaurant).

Another source for context information is the device. Various information about the device can be retrieved either explicitly or implicitly. For example, a device profile may be stored that contains device information such as manufacturer, memory, processor speed, display characteristics, input devices, etc. This type of context information may also be useful in determining which information to retrieve from the content providers. For example, if a family is viewing a comedy program, the system may determine it would be beneficial to distribute relevant information about the lead actor to the various devices, including, for example, information about recent projects that the lead actor is appearing in. If one device has much greater processing speed, memory availability, and display characteristics than another, it may be desirable, for example, to provide a video movie trailer for a recent movie the actor has appeared in to the more powerful device, while the less powerful device receives only textual information about the actor's new movie. In another example, if the content is music, a different sound profile may be automatically selected for the speakers of the device on which the content is being played.

A device profile is an example of explicitly-specified device context information, but this information may also be deduced from implicit sources. For example, the system may be able to deduce that the device has the capability to play high definition video if there are a number of high-definition video files stored in the memory of the device. Alternatively, this may be accomplished by retrieving device specifications from a public or private database by indexing the device ID.

Another source for context information is the environment in which the device is operating. This may include a variety of different things, including external environmental information (time of day, temperature, location, etc.) and internal environmental information (operating system, other applications being run simultaneously, etc.). This type of context information may also be useful in determining which information to retrieve from the content providers. For example, if the location of the device is "at home", then the additional data downloaded from content providers may be more recreational than if the device is "at work."

External context information can be retrieved from a variety of external sensors or devices. For time of day, for example, a clock device located on a motherboard may be accessed. For location, a global positioning sensor (GPS) or similar tracking device may be utilized. For temperature, a temperature sensor may be utilized (alternatively, location information may be fed to an external database where current temperature can be retrieved for the location). Content that is focused on the device, such as applications, type of applications, objects in applications, etc.) may also be examined for context information. Furthermore, compass sensors in the device may indicate a direction, while accelerometer sensors may indicate the movement/gesture of a user. Further input data can be captured by auxiliary input devices attached to a device, such as ma microphone, light sensor, camera, etc.

Furthermore, in an embodiment of the present invention, the context information is augmented in order to improve query results. As an example, there are certain pieces of metadata that might ordinarily not provide, in and of themselves, enough information to return relevant results. For example, if the user is watching source media such as a DVD, it might be beneficial to pull the title of the movie off the DVD metadata (which might include, for example, the title of the DVD) and use that to search for related information off the Internet (such as merchandise related to the movie, reviews of the movie, news relating to sequels, etc.) While this extracted context alone may be enough to provide relevant results for some types of movie titles, other titles are too general to provide meaningful results. A movie title such as "The Shawshank Redemption" is unique enough to return results that are likely to be related to the movie, but a movie title such as "Killers" is so general that simply performing a query on the term "Killers" is likely to return mostly results that are completely unrelated to the movie.

Indeed, the sufficiency of the context extracted from the metadata may also depend on the particular micro-app being used for the search. A search of the title "Killers" in a micro-app relating to movies (such as a Netflix™ or Hulu™ microapp) may very well return relevant results, while a search of the same term in a more general micro-app (such as Amazon™ or eBay™) likely would not, unless a more advanced search mechanism is used (e.g., adding category information to the search). While some general micro-apps include such advanced search mechanisms, some do not.

As such, an embodiment of the present invention augments the raw context in order to improve search results. This augmentation may take many forms, including adding additional terms to the query, adding category information, adding constraints on the searches, and adding information about the device or user that is playing the media. The augmentation process will be described in more detail below.

In another embodiment of the present invention, a module is provided that intelligently decides whether to augment a search term. Such a module may, for example, examine the generality of the original search term, the intelligence of the service provider, and any available context information and decide whether or not to pad the search term with extras keywords extracted or inferred from metadata.

The raw context information used to query the one or more content providers can be retrieved from a number of different sources. One source is the media being played itself. This type of context information may be called "media content context information" and may include any information about the media itself. One common source for such information can be metadata that accompanies the media. For television broadcasts, this information may be embedded in a digital broadcast stream. For over the top (OTT) video on demand (VOD) videos or photos, this information may be encoded in the downloaded media files, or may be transmitted separately. For DVD or Blu-Ray™ discs, this information may be encoded on the disk itself (such as in a dedicated metadata file), or may be available externally, such as using an external GD3 identification database. Normal video, photo, or music files stored on a hard disk drive can contain metadata information within the files themselves, such as the ID3 metadata in an mp3 file, or an exif file for a digital camera. Digital Living Network Alliance (DLNA) streams can include embedded metadata as well. Example of media content context information may include titles, genres, actors, directors, running times, scene information, music tracks, composers, authors, etc. Additional file streams, such as from social networking websites or from video streaming web sites can also be utilized with embodiments of the present invention. Additionally, files from non-media applications can also be utilized, such as news, maps, games, etc.

It should also be noted that the term "content provider" as used in this document shall be construed broadly to cover any entity that provides information or services that may be desired by the user. This may include textual information, graphical information, shopping capabilities, mapping tools, and so on. While some in the art make a distinction between "service provider" and "content provider", others in the art recognize that many providers blur the line between providing content and providing service and simply group all providers under the single title of "content provider." It is this latter definition that is used throughout this document.

It should also be noted that the term "media" as used in this document shall be interpreted broadly to include more than just traditional video, photos, and text, but also other information for user viewing or listening that is transmitted to a device. Thus, "media" can include, for example, text in a newsreader application, maps in a mapping application, or graphics in a game application, and thus the "media content context information" can include context information regarding these items as well.

It should also be noted that the term "micro-app" as used in this document shall be interpreted broadly to include ay application that can be installed on a device that queries a content provider. However, in some embodiments the micro-app is connected to another application or service and provides limited micro-functions within the full application or service (called "full-app"). Users may use full-apps to view media content. Examples of full-apps include a TV+ Broadcast widget, a Pandora™ widget, a Netflix™ widget, an Amazon.com™ marketplace widget. One full-app may have multiple associated micro-apps. For example, the Amazon.com™ marketplace widget may include an Amazon™ micro-app may provide only limited micro-functions (such as automatic search based on context, limited purchasing ability, etc.). A micro-function is a function that performs merely one action, such as "add-to-cart" or "add-to-favorites".

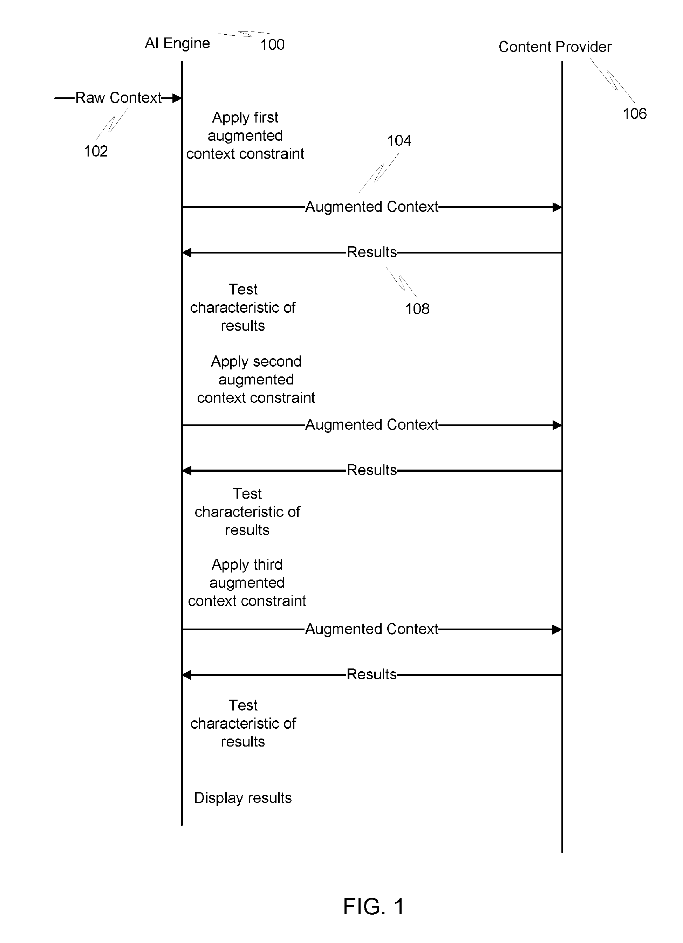

As described briefly above, in one embodiment of the present invention, raw context information is augmented with additional information in order to improve search results. This may be accomplished by using one or more constraint policies and applying these policies in a progressive order to the search queries. In this manner, it is not just possible to "augment" raw context information, but also to further augment the already augmented raw context information if the results returned are still not optimized fully. This iterative approach can be used to minimize the complexity of algorithms run by the artificial intelligence engine used to augment the search queries. It should be noted that constraints at this point in the process may be termed "augmented context constraints" to differentiate them with other constraints that may be present in the policy (such as results constraints to be applied to returned results). This embodiment is depicted in FIG. 1. Here, as can be seen, AI engine 100 receives raw context 102, then applies a first constraint from a policy to the raw context 102 to produce augmented context 104. This augmented context is then used as a search query to content provider 106. Results 108 may be returned, and a characteristic of the results may be tested against a precondition. For example, one precondition may be that the number of results returned is less than a preset amount. The iteration of additional constraints can be repeated until there are no more constraints to apply, or until a precondition has been met.

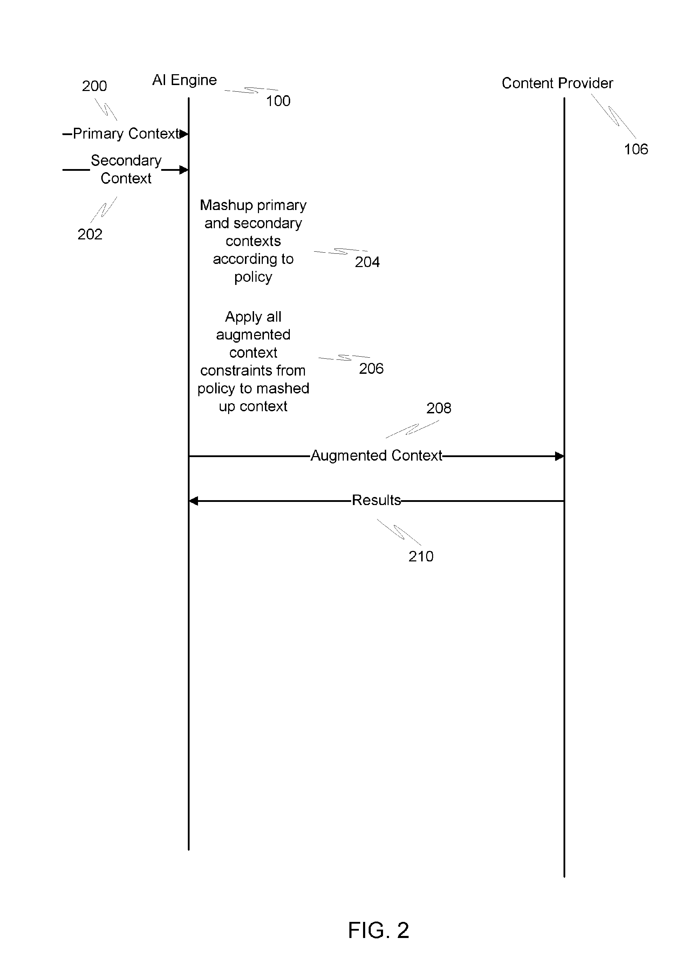

In an alternative embodiment of the present invention, raw context information is augmented with additional information based on one or more constraint policies, but rather than using an iterative approach all of the constraints are applied at once, before the augmented query is sent to the content provider(s). This may be depicted in FIG. 2. Here, AI Engine 100 receives both primary context 200 and secondary context 202 information. Then, at 204, these contexts are mashed up (according to a policy) to produce a single mashed up context. Then, at 206, all the constraints from a policy may be applied to the mashed up context. At 208, this augmented context is sent to content provider 106, which returns results 210.

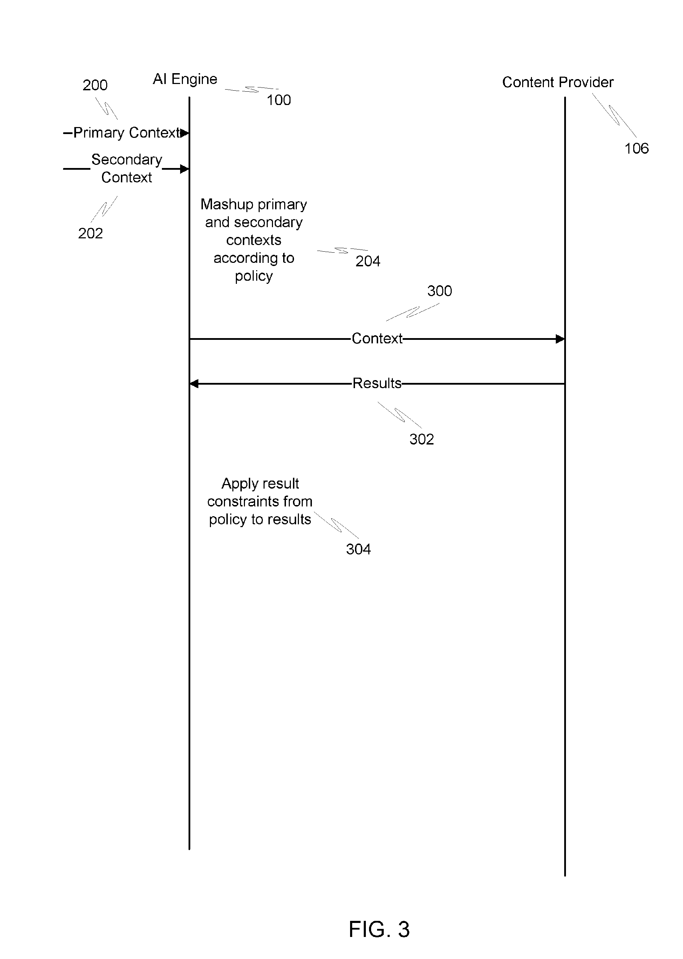

In another alternative embodiment of the present invention, raw context information may be mashed up but constraints are not applied until after results have been returned. This is depicted in FIG. 3. Here, AI Engine 100 receives both primary context 200 and secondary context 202 information. Then, at 204, these contexts are mashed up (according to a policy) to produce a single mashed up context. At 300, the context is then sent to content provider 106 as a query, which returns results 302. At 304, AI Engine 100 may then apply the constraints from the policy to the results 302.

In another embodiment of the preset invention, various filtering may be performed on the results from the content providers prior to displaying the results. This filtering may be especially useful if results from multiple micro apps (and thus multiple content providers) are being retrieved at the same time. One key type of filtering includes ranking. Here, the results are ranked in order of applicability. This may be determined using an algorithm, and thus algorithm can be designed in any number of ways. In some embodiments, this algorithm may even utilize user, device, and/or environmental context information to aid in determining which content is the most applicable for the particular device at that moment. Other examples of filtering include cross-reference checking and personalization of the search results.

The constraint policy or policies used to augment a particular query can vary greatly depending upon implementation. In some embodiments, these policies can take into account the type of content provider to which the augmented query will be forwarded. For example, a policy may dictate that the term "movie" be added to a title search from a DVD if the content provider is a general search engine, such as eBay or Amazon, while a policy may dictate that no such term be added if the content provider is more movie-oriented, such as Netflix or Hulu. Thus, in some embodiments, the content provider may first be classified and then this classification may then be used to lookup an appropriate policy in a lookup table.

In other embodiments, various device and/or user characteristics may be utilized in determining the policy. For example, there may be a different policy for when the user is utilizing a laptop computer than when the same user is utilizing a tablet computer. In such a case, the policy may dictate fewer results be returned for a tablet because of the limitations of the display of the tablet computer.

In another embodiment of the present invention, different weights may be applied to different constraints. In that manner, for example, a constraint based on the type of content engine may be weighted more than a constraint based on device type. Of course, this embodiment is more likely to be beneficial in configurations that do not use the iterative-based constraint application approach described above. That is because an iterative-based approach is essentially weighting constraints anyway, by virtue of the later-applied constraints possibly not being applied even though earlier-applied constraints have already been applied.

In one embodiment of the present invention, the system is extended to a cloud. In this manner, for example, the raw context can be retrieved from any number of different devices in different locations. Consumers have been accumulating volumes of digital assets and using more and more Internet services. Consumers typically access these assets and services using more than one device. A typical consumer may have a desktop computer, a laptop computer, and a cell phone (and possibly other devices as well) that can all be used to access and gather information and media. The trend will continue while huge amounts of services and contents are made available on the Web daily. These assets and services are typically scattered around in personal devices as well as in various informal groupings of information known as clouds. A cloud is a formal or informal grouping of information based on control. The present invention anticipates extending the augmented context systems in a similar manner.

The framework of the present invention allows users to access several services that augment the user experience by using the current context and presenting relevant information, using a micro-app (or multiple micro-apps). In one embodiment, this framework also allows content providers to quickly develop a micro-app that enhances media with their proprietary data. The framework can provide for quick micro-app development by providing basic user interface and API capability for third part developers, allowing them to efficiently create micro-apps that are compatible with the system.

Additionally, a shared data structure schema between micro-apps can be provided, allowing each of the micro-apps to become "context-aware" in a consistent manner. This allows media providers to feel more comfortable with undertaking the necessary steps to encode metadata or otherwise provide context information regarding their media, knowing that many different micro-apps will have access to that context information (as opposed to, for example, just one micro-app, if a proprietary metadata format is used). Thus, a system and a repository can be provided that allows content providers to access a shared context to seamlessly enhance main media content by providing relevant ancillary information about the content being viewed or heard.

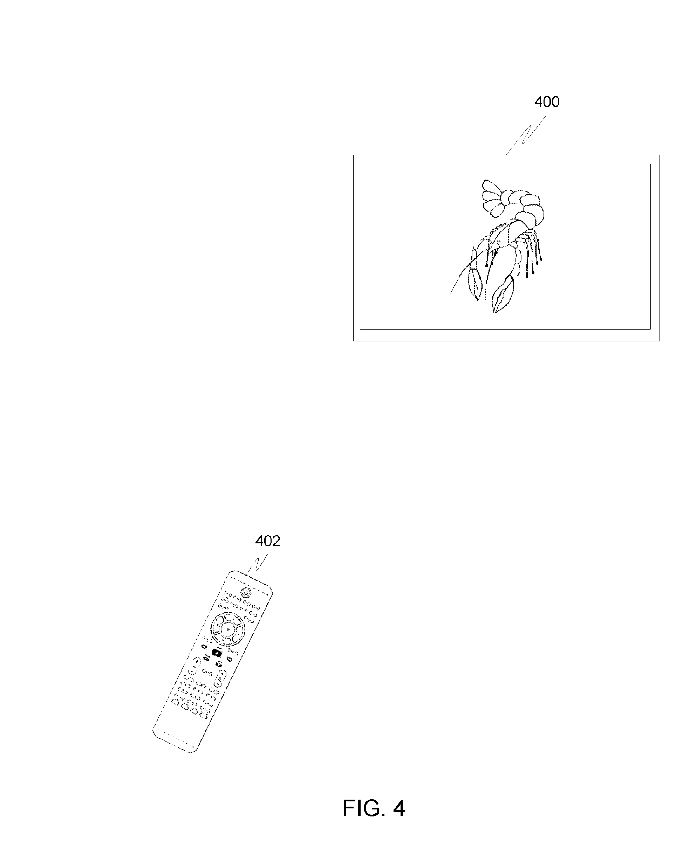

FIG. 4 is an example of a system in accordance with an embodiment of the present invention. Here, the television 400 is the device on which the present invention resides. Also included in the system may be a remote control 402.

In one embodiment, users can initiate an extra mode for the television (called TV+ mode) by pressing a button on the remote control 402. Alternatively, users can set the television to notify them of available content via a particular micro-app.

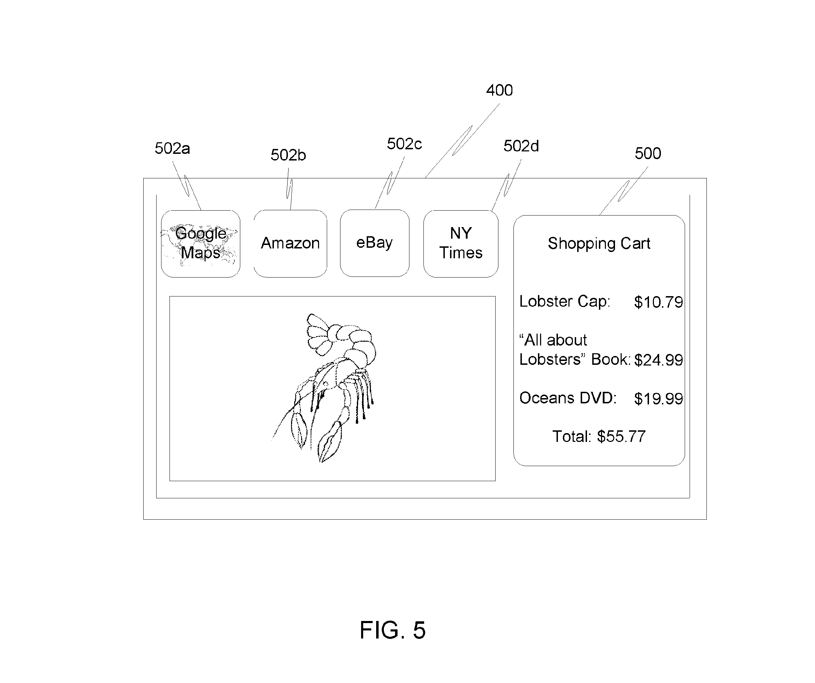

FIG. 5 is an example of shrinking media to a corner of a television to allow room for the TV+ experience in accordance with an embodiment of the present invention. Here, upon execution of the TV+ mode, users are presented with a dashboard 500 on the television 500 that shows each user a summary of his or her past activity (e.g., items added to shopping cart, or favorites), and different micro-apps 502a, 502b, 502c, 502d.

The television dashboard can also display a textual information bar regarding the current content being watched. Users can then execute a certain micro-app to receive auxiliary or supplemental information about the current media content. Doing so causes the television to switch to the content retrieved from the selected micro-app while still allocating part of the television screen for the current media displaying its own current content. Such auxiliary or supplemental information can also be rendered on a secondary or personal device.

On the television-side, users can be navigated to the corresponding micro-app's homepage where, along with the current content, a list of current users logged in can be displayed. On the smart phone side, due to the availability of a personal screen, users can be presented with more information. This may include an information bar displaying textual information about the current media. This may also include a set of items relevant to the current media (retrieved from the micro-app content provided). These items can be grouped into logical categories for easier interactions (e.g., movies, music, toys, merchandise, etc.). This may also include a recommendation bar, whose content gets populated upon the selection of an item in the provided categories. In one implementation, each category can be represented in the form of a tab, allowing users to navigate between categories by selecting different tabs.

As described above, recommended items may be presented to the users based on various factors. One of these factors may be past purchases. An online bookseller, for example, may have records of past purchases of a user and may utilize a knowledge based to intelligently recommend other books that might be interesting to the user. However, other factors may play into these recommendations as well, including user, device, and environmental context information, as described earlier.

The querying itself can take a variety of different forms, largely dependent on the type of micro-app and the type of content provider. For example, if the content provider is a mapping tool, the query may take the form of location information. If the content provider is an online retailer, the query may take the form of a title, actor, or author. Embodiments are also foreseen wherein the content provider takes any type of input and intelligently deciphers it to determine how best to serve content based on the query. For example, the content provider may be a portal to several different services (e.g., financial information, sports information, mapping, online shopping) and the content provider may take the query and determine which of these services to query and then send the query to only the appropriate service.

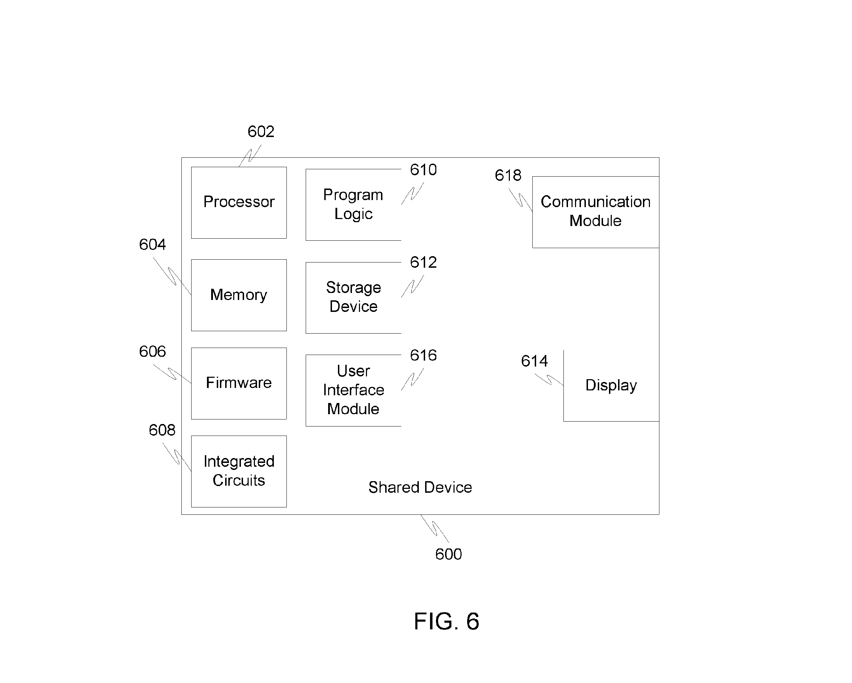

FIG. 6 depicts example hardware components in device capable of implementing embodiments of the method and system disclosed herein. In one embodiment, the device 600 comprises a television having a processor 602, memory 604, firmware 606, integrated circuits 608, program logic 610, a storage device 612, a display screen 614, a user interface module 616, and a communication module 618. The communication module 618 may be, for example, a network interface device or a wireless radio transmitter/receiver.

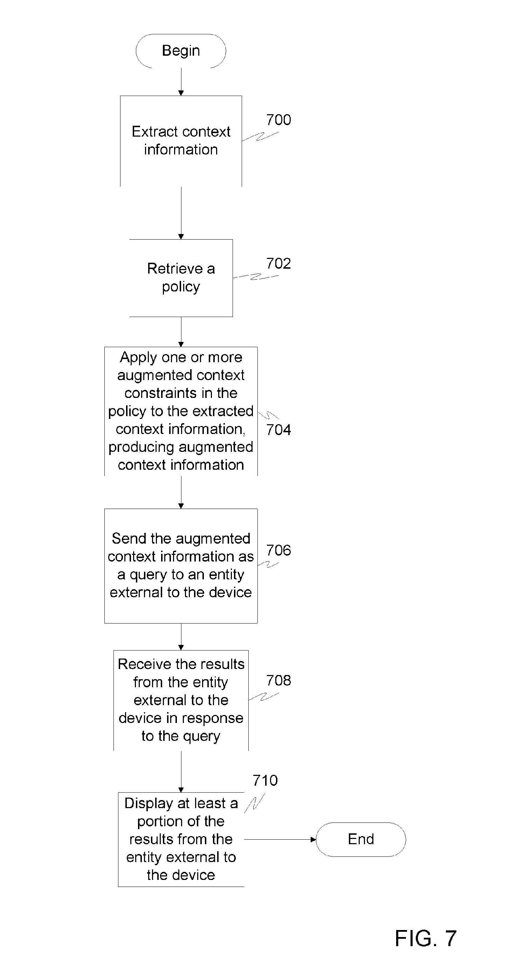

FIG. 7 is a flow diagram illustrating a method for enhancing content playing on a device in accordance with one embodiment of the present invention. This is a generic embodiment, wherein constraints in a policy may be applied either all at once or using an iterative approach. At 700, context information is extracted. At 702, a policy is retrieved. This policy may comprise one or more constraints. The policy may be customized based on the entity external to the device, or on characteristics of the device. Additionally, in some embodiments, each of the constraints may be assigned a different weight. At 704, one or more of the constraints in the policy are applied to the extracted context information, producing augmented context information. The constraint may involve, for example, adding an additional term to the context information to limit results, perhaps based on the classification of the entity external to the device. In such embodiments, this classification may be performed by the device itself.

In embodiments where the constraints are assigned weights, the applying may be based on those weights (for example, higher weighted constraints may be applied first or results from higher weighted constraints may be favored over ones from lower weighted constraints). At 706, the augmented context information is sent as a query to an entity external to the device. The entity external to the device may be, for example a context provider or a service provider. The entity may be located on the Internet. At 708, the results from the entity external to the device are received in response to the query. At 710, at least a portion of the results from the entity external to the device are displayed on the device.

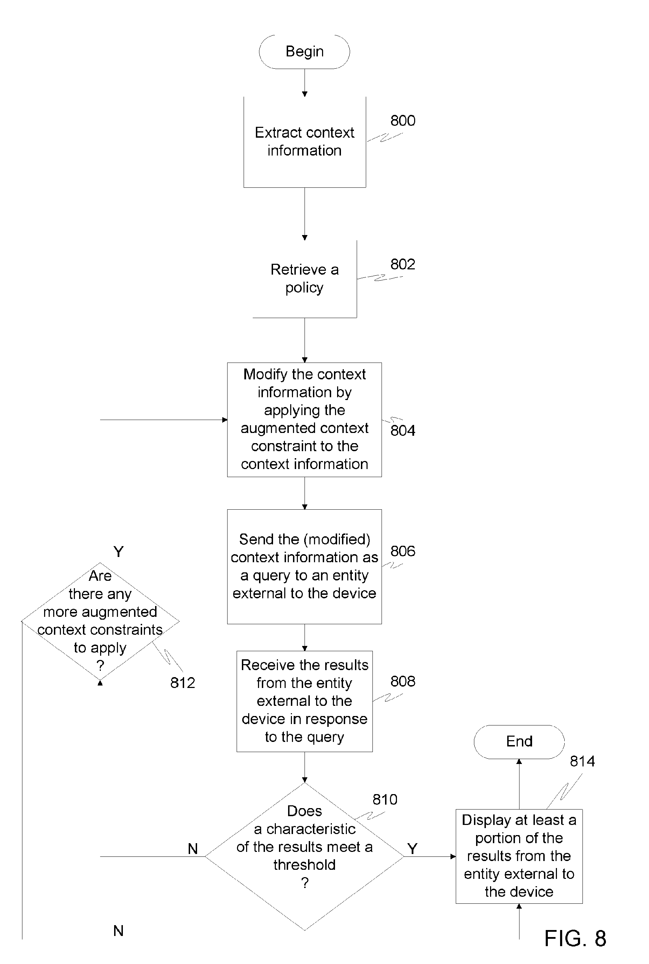

FIG. 8 is a flow diagram illustrating a method for enhancing content playing on a device in accordance with another embodiment of the present invention. Here, constraints are applied using an iterative approach. At 800, context information is extracted. At 802, a policy is retrieved, wherein the policy comprises a plurality of constraints and a threshold for a characteristic of query results. The characteristic can be, for example, a number of results, with the threshold set based on display characteristics of the device. At 804, the iterations may begin. Thus, for each constraint, until a characteristic of query results meets the threshold, the process loops through 804-810. It should be noted that the term "meets the threshold" is used to encompass both the case where a threshold is considered met when the characteristic is greater than the threshold and the case where a threshold is considered met when the characteristic is less than the threshold.

At 804 the context information is modified by applying the constraint to the context information. Then at 806, the (modified) context information is sent as a query to an entity external to the device. Then at 808, results are received from the entity external to the device in response to the query. At 810, it is determined if a characteristic of the results meet the threshold. If so, the iterative process ends and proceeds to 814. If not, at 812, it is determined if there are any more constraints to apply. If not, the iterative process ends and proceeds to 814. If so, then the process repeats back at 804 using the modified context information from the last iteration. In this manner, each successive iteration builds on the modifications made the context information from the previous iteration. At 814, at least a portion of the results from the entity external to the device are displayed on the device.

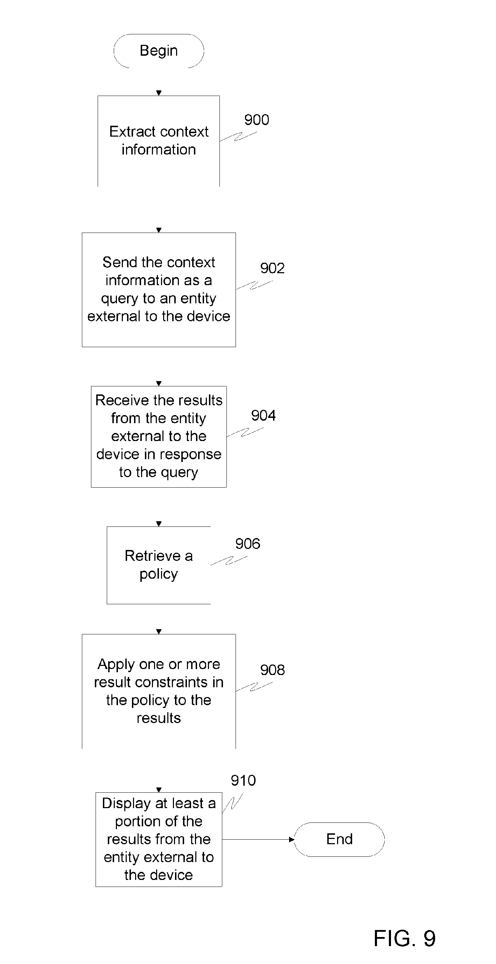

FIG. 9 is a flow diagram illustrating a method for enhancing content playing on a device in accordance with another embodiment of the present invention. Here, constraints are applied only after the results are received. At 900, context information is extracted. At 902, the context information is sent as a query to an entity external to the device. Then at 904, results are received from the entity external to the device in response to the query. At 906, a policy is retrieved, wherein the policy comprises a plurality of constraints. At 908, one or more of the constraints in the policy is applied to the results. At 910, at least a portion of the results from the entity external to the device are displayed on the device.

It should also be noted that in the above embodiments only a single content or service provider is discussed, implementations are possible where multiple content and/or service providers are accessed, possibly simultaneously, based on the same primary context information. In such cases, the augmented context information may either be identical among the multiple providers, or may vary due to differences in their search engines/capabilities.

As will be appreciated to one of ordinary skill in the art, the aforementioned example architectures can be implemented in many ways, such as program instructions for execution by a processor, as software modules, microcode, as computer program product on computer readable media, as logic circuits, as application specific integrated circuits, as firmware, as consumer electronic device, etc. and may utilize wireless devices, wireless transmitters/receivers, and other portions of wireless networks. Furthermore, embodiment of the disclosed method and system for displaying multimedia content on multiple electronic display screens can take the form of an entirely hardware embodiment, an entirely software embodiment, or an embodiment containing both software and hardware elements.

The term "computer readable medium" is used generally to refer to media such as main memory, secondary memory, removable storage, hard disks, flash memory, disk drive memory, CD-ROM and other forms of persistent memory. It should be noted that program storage devices, as may be used to describe storage devices containing executable computer code for operating various methods of the present invention, shall not be construed to cover transitory subject matter, such as carrier waves or signals. Program storage devices and computer readable medium are terms used generally to refer to media such as main memory, secondary memory, removable storage disks, hard disk drives, and other tangible storage devices or components.

The various aspects, features, embodiments or implementations of the invention described above can be used alone or in various combinations. The many features and advantages of the present invention are apparent from the written description and, thus, it is intended by the appended claims to cover all such features and advantages of the invention. Further, since numerous modifications and changes will readily occur to those skilled in the art, the invention should not be limited to the exact construction and operation as illustrated and described. Hence, all suitable modifications and equivalents may be resorted to as falling within the scope of the invention.

## Claims

1. A method for enhancing content playing on a device, the method comprising:
extracting context information;
retrieving a policy, wherein the policy comprises one or more constraints;
applying one or more of the constraints in the policy to the extracted context information, producing augmented context information;
sending the augmented context information as a query to an entity external to the device;
receiving results from the entity external to the device in response to the query; and
displaying the results from the entity external to the device on the device.

2. The method of claim 1, wherein the entity external to the device is a content provider or a service provider.

3. The method of claim 1, wherein the policy is customized based on the entity external to the device or on characteristics of the device.

4. The method of claim 1, wherein each of the constraints in the policy is assigned a different weight and wherein the applying one or more of the constraints is based on the weights of the constraints.

5. A method for enhancing content playing on a device, the method comprising:
extracting context information;
retrieving a policy, wherein the policy comprises a plurality of constraints and a threshold for a characteristic of query results;
for each of the plurality of constraints, until a characteristic of query results meets the threshold:
modifying the context information by applying the constraint to the context information;
sending the context information as a query to an entity external to the device;
receiving results from the entity external to the device in response to the query; and
determining if a characteristic of the results meets the threshold; and
displaying on the device results from the last query sent to the entity external to the device.

6. The method of claim 5, wherein the characteristic is number of results and the threshold is set based upon display characteristics of the device.

7. The method of claim 5, wherein at least one of the constraints adds an additional term to the context information to limit results.

8. A device for enhancing media playing on a device, the device comprising:
an interface;
memory;
a display;
a processor configured to:
extract context information;
retrieve a policy from the memory, wherein the policy comprises one or more constraints;
apply one or more of the constraints in the policy to the extracted context information, producing augmented context information;
send the augmented context information via the interface as a query to an entity external to the device;
receive results via the interface from the entity external to the device in response to the query; and
display the results from the entity external to the device on the display.

9. The device of claim 8, wherein the constraints are all applied prior to the augmented context information being sent via the interface as a query to the entity external to the device.

10. The device of claim 8, wherein the device is a home network-enabled television or a mobile phone.

11. An apparatus for enhancing content playing on a device, the method comprising:
means for extracting context information from the content;
means for retrieving a policy, wherein the policy comprises a plurality of constraints and a threshold for a characteristic of query results; and
means for, for each of the plurality of constraints, until a characteristic of query results meets the threshold:
modifying the context information by applying the constraint to the context information;
sending the context information as a query to an entity external to the apparatus;
receiving results from the entity external to the apparatus in response to the query; and
determining if a characteristic of the results meets the threshold; and
displaying on the device results from the last query sent to the entity external to the apparatus.

12. The apparatus of claim 11, wherein the apparatus is located in a cloud.

13. The apparatus of claim 11, wherein the entity external to the apparatus is located in a cloud.

14. A non-transitory program storage device readable by a machine tangibly embodying a program of instructions executable by the machine to perform a method for enhancing content playing on a device, the method comprising:
extracting context information;
retrieving a policy, wherein the policy comprises one or more constraints;
applying one or more of the constraints in the policy to the extracted context information, producing augmented context information;
sending the augmented context information as a query to an entity external to the device;
receiving results from the entity external to the device in response to the query; and
displaying the results from the entity external to the device on the device.

15. The non-transitory program storage device of claim 14, wherein the program of instructions includes an iterative procedure.
